# FASCICULE DE BREVET EUROPEEN

(11) **EP 1 314 355 B1**
(45) Date de publication et mention de la délivrance du brevet: **29.12.2004**
(21) Numéro de dépôt: 02356242.4
(22) Date de dépôt: 25.11.2002
(51) Int. Cl.: A01M 29/00

(54) **Installation électrique répulsive pour oiseaux**
Elektrische Vogelabschreckvorrichtung
Electrical bird repellent device

(30) Priorité: 23.11.2001 FR 0115400
(43) Date de publication de la demande: 28.05.2003
(73) Titulaire: Tresse Industrie, 63600 Ambert (FR)
(72) Inventeur: Omerin, M. Pierre, 63600 Ambert (FR)
(74) Mandataire: Maureau, Philippe

(56) Documents cités:
- US-A- 3 291 897
- US-A- 4 015 176
- US-A- 4 299 048

## Description

L'invention est relative à une installation électrique répulsive pour oiseaux, et par exemple pour pigeons, mouettes, passereaux.

De nombreux oiseaux s'installent dans les zones urbanisées pour y trouver soit de la nourriture, soit de la chaleur, avec pour conséquence, de souiller par leurs excréments les lieux où ils se posent, en pouvant entraîner des détériorations préjudiciables au bâtiment.

Pour remédier à cela, il a été envisagé d'utiliser des installations électriques s'inspirant des clôtures électriques retenant des animaux en pâture dans un champ.

Or, dans une telle clôture électrique mettant en oeuvre une source d'énergie électrique à haute tension et faible intensité, c'est l'animal qui ferme le circuit par contact avec la clôture, puisqu'il repose sur la terre mise au potentiel de référence, distinct de celui de la clôture. Il résulte de ce principe de fonctionnement qu'un oiseau, de type pigeon, mouette ou passereau, venant se poser sur la ligne électrique, ne ferme pas le circuit et n'est donc pas soumis à un effet répulsif.

Les documents US 4 299 048 et US 4 015 176 décrivent des installations mettant en oeuvre une paire de conducteurs électriques qui, alimentés par le réseau électrique ou une batterie, forment un circuit électrique dont la fermeture est assurée par les pattes du volatile et qui est destinée à exterminer le volatile pour le premier document, et à l'étourdir pour le second. Ces installations ne peuvent pas fonctionner par temps de neige, de gel et lorsqu'elles sont imprégnées d'eau.

L'installation selon l'invention vise un autre résultat qui est d'obtenir un effet répulsif obligeant le volatile à choisir une autre aire de repos et a pour objet de fournir une ligne continue souple pour pouvoir envelopper la ramure d'un arbre et qui soit insensible aux intempéries.

Cette installation selon la revendication 1 comprend au moins une paire de conducteurs électriques nus disposés parallèlement et alimentés à des potentiels différents et de façon discontinue, ces conducteurs étant portés par une structure en matériau non conducteur de l'électricité et ayant une dimension transversale lui permettant d'être saisis par les pattes des oiseaux qu'il faut repousser.

Selon l'invention, chacun des conducteurs d'une paire de conducteurs, d'une part, est positionné et calé par rapport à l'autre conducteur de la même paire par entrecroisement de fils ou fuseaux d'une structure tressée en monofilaments isolants, et, d'autre part, est muni à l'une de ses extrémités d'un manchon isolant et, à son autre extrémité, d'un organe de connexion avec l'une des bornes d'un générateur de décharges électriques impulsionnelles à haute tension fournissant une énergie comprise entre 0,7 et 2 joules.

Avec cet agencement, dès qu'un oiseau se pose sur la ligne électrique en enserrant celle-ci par ses pattes, lesdites pattes formant conducteur électrique assurent la liaison électrique entre deux conducteurs à des potentiels différents, ce qui génère une décharge électrique ayant un effet répulsif. Dans certaines conditions d'alimentation et météorologiques, l'oiseau peut recevoir une décharge avant même de se poser sur la ligne électrique, ce qui est encore plus dissuasif.

Grâce à sa constitution, cette ligne répulsive peut être déformée sans que cela modifie la position relative des conducteurs de chaque paire de conducteurs, ce qui n'est pas le cas dans le conducteur toronné décrit dans le document US 3 291 897. En effet, ce conducteur doit rester tendu à défaut de quoi la détorsion des bouts du rotor qui le composent, risque de générer des courts-circuits par mise en contact de fils conducteurs à des potentiels différents.

Cette déformabilité de la ligne selon l'invention permet de la conformer, quelles que soient les conditions de pose, à savoir pose contre une paroi, un support, une corniche, disposition en guirlandes sur un bâtiment ou dans la ramure d'un arbre, pose tendue.

De préférence, les monofilaments composant les fils isolants des faisceaux tressés sont choisis parmi les matériaux hygrophobes suivants : polyoléfines, polychlorures de vinyles, polyesters saturés, polyamide 11, polymères fluorés, polysulfures de phénylène.

La constitution des monofilaments et la structure tressée de la ligne permettent à cette dernière de conserver son effet répulsif, quelles que soient les conditions météorologiques, à savoir forte pluviométrie, neige, emprisonnement par une gangue de glace ou immersion dans de l'eau.

Dans une forme d'exécution de l'invention, la structure tressée est de forme tubulaire et est emmanchée sur ou formée sur une âme tubulaire en matière thermoplastique souple constituant organe de rigidification et de fixation en collaboration avec des supports isolants avec colliers emprisonnants.

L'âme procure une plus grande rigidité transversale et longitudinale à la ligne répulsive. Elle évite sa déformation lorsque l'oiseau se pose sur elle ou lors de sa mise en place et facilite sa fixation sur des supports isolants posés sur le bâtiment devant être protégé.

L'invention sera mieux comprise à l'aide de la description qui suit en référence au dessin schématique annexé représentant plusieurs formes d'exécution de l'installation.
Figure 1 est une vue en perspective partielle d'une première forme d'exécution de l'installation,
Figures 2 et 3 sont des vues partielles en perspective de deux formes d'exécution de la structure de la ligne,
Figure 4 est une vue en élévation montrant, à échelle agrandie, la structure de la ligne de figure 2,
Figure 5 est une vue partielle en coupe montrant la structure développée entre deux fils conducteurs à des potentiels différents,
Figures 6, 8, 12 et 14 sont des vues de côté en élévation représentant quatre autres formes d'exécution de cette ligne répulsive,
Figures 7, 9, 13 et 15 sont des vues en coupe transversale correspondant aux formes d'exécution des figures 6, 8, 12 et 14.
Figures 16 et 17 représentent, en coupe partielle, une forme d'exécution des moyens d'isolement extrême et connexion des conducteurs de la ligne répulsive,

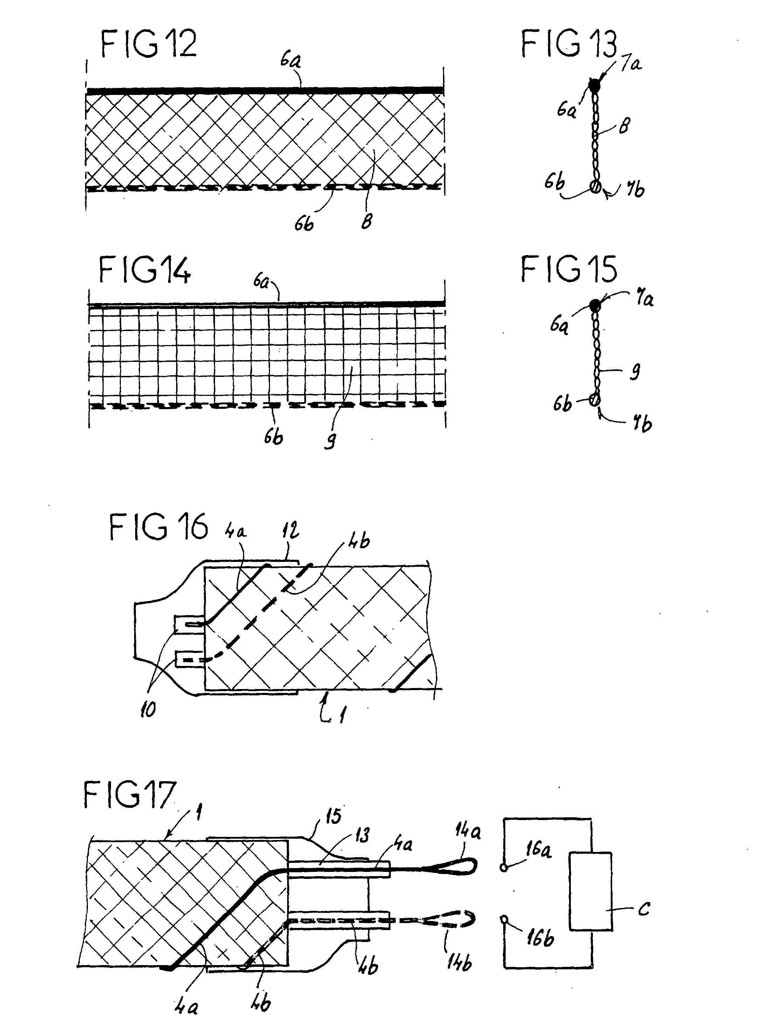

Figures 10 et 11 sont des vues en bout montrant d'autres formes d'application.

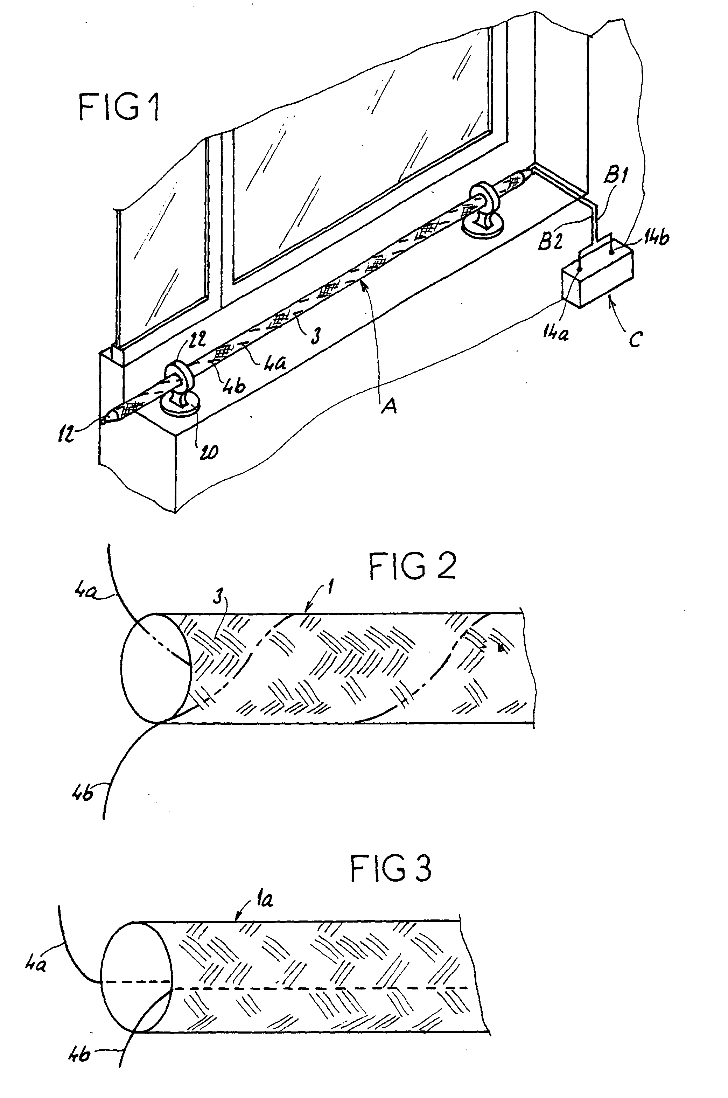

Comme montré à la figure 1, l'installation est essentiellement composée d'une ligne répulsive A reliée par deux conducteurs d'électricité B1, B2 à un générateur C de décharges électriques impulsionnelles à haute tension. La ligne A est composée d'une structure de fils 3 en matériau non conducteur de l'électricité tressés et dont l'entremêlage assure le positionnement et le calage en position d'au moins deux fils 4a, 4b conducteurs de l'électricité et disposés parallèlement avec un espace constant.

Dans la forme d'exécution représentée à la figure 1, la structure 1 de la ligne répulsive A est constituée par une gaine tubulaire tressée dans laquelle les fils conducteurs 4a, 4b sont enroulés en hélice.

A la figure 3, la structure 1a est également constituée par une gaine tubulaire tressée et ses deux fils conducteurs 4a, 4b sont disposés longitudinalement et diamétralement opposés.

Dans les deux configurations, les fils conducteurs sont maintenus parallèlement l'un à l'autre par l'entremêlement des fils de la structure et cela quelle que soit la configuration, la conformation et la déformation données à la gaine constituant la structure de la ligne.

Les fils 3 composant les fuseaux de la tresse sont constitués par des monofilaments en matière thermoplastique non conductrice de l'électricité et, de préférence, en matière hygrophobe, c'est-à-dire ayant une valeur d'absorption de l'eau inférieure à 0,2 % selon la norme française T51-290. Les matériaux sont choisis parmi les polyoléfines, tels que polyéthylène et polypropylène, les polychlorures de vinyle, les polyesters saturés (PET et PBT), le polyamide 11, les polymères fluorés (PVDF et ETFE) et les polysulfures de phénylène (PPS). Ces monofilaments ont une section transversale qui est soit circulaire, avec un diamètre compris entre 0,16 millimètre et 0,45 millimètre, soit méplate, c'est-à-dire avec une section rectangulaire ayant une valeur comprise entre 0,02 millimètre carré et 0,65 millimètre carré.

Les fils conducteurs de l'électricité sont réalisés dans l'un des matériaux suivants : cuivre non revêtu, cuivre étamé, cuivre nickelé, cuivre argenté, cuivre émaillé, alliage de cuivre, aluminium revêtu ou non, aluminium émaillé, alliage d'aluminium, nickel et alliage de nickel, acier inoxydable, acier galvanisé, alliage d'acier. Leur section est circulaire avec des diamètres compris entre 0,15 à 0,8 millimètre ou méplate avec des faces plates ou demi rondes, de dimensions comprises entre 0,1 X 0,2 millimètre et 0,25 X 2 millimètres.

La dimension transversale de la ligne est déterminée en fonction de la capacité de serrage des pattes des oiseaux devant être repoussés, et est par exemple comprise entre 5 et 10 millimètres, tandis que sa longueur dépend de la longueur à protéger et peut aller, par exemple, de quelques mètres, pour la protection d'une façade, à 150 mètres pour la protection de la ramure d'un arbre.

L'intervalle, c'est-à-dire la distance entre deux conducteurs 4a, 4b formant une paire de conducteurs à des potentiels différents et mesuré perpendiculairement à ces conducteurs, dépend de la dimension transversale de la ligne et est comprise entre 7 et 15 millimètres.

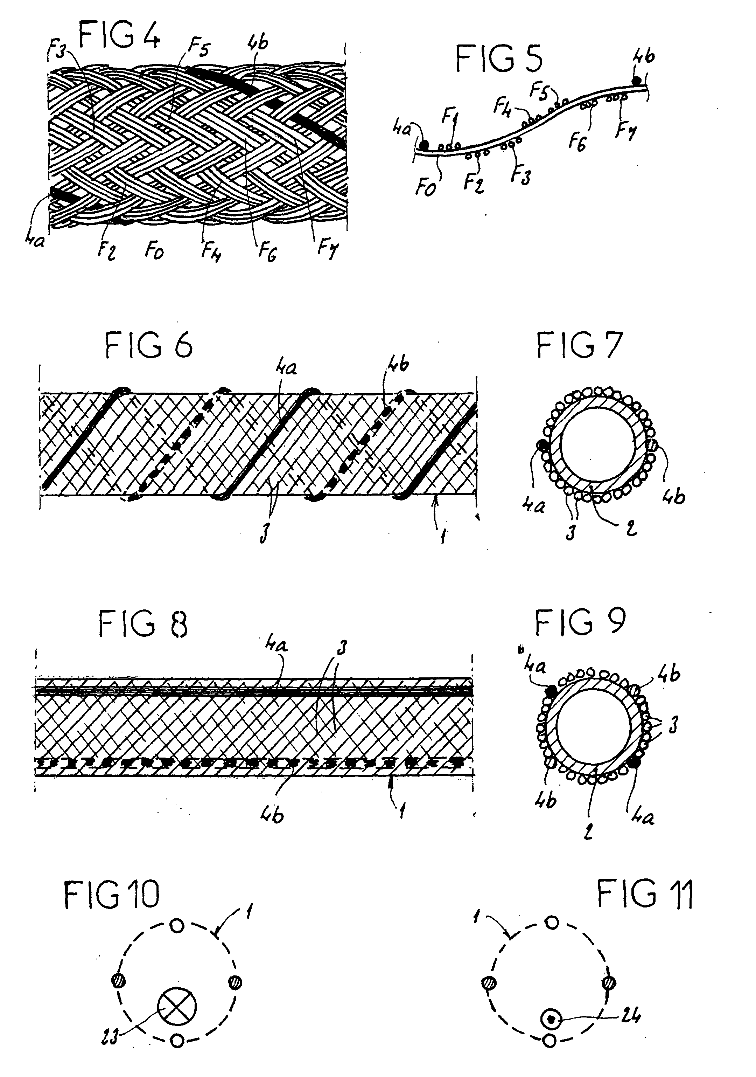

La forme tubulaire de la ligne répulsive permet de l'utiliser telle quelle dans des applications exigeant une grande possibilité de déformation ou en combinaison avec une âme 2, montrée aux figures 7 et 9, sur laquelle soit elle est formée, soit elle est emmanchée. L'âme 2, en matière thermoplastique souple et isolante, donne à la ligne une certaine rigidité lui permettant d'être fixée au moyen de supports rigides et isolants tels que des pontets 20 avec colliers emprisonnants 22, comme montré à la figure 1. Cette forme tubulaire avec ou sans âme 2 peut être utilisée, comme montré à la figure 10, pour le passage d'une guirlande lumineuse 23, ou, comme montré à la figure 11 pour le passage d'un câble chauffant 24.

Les figures 4 et 5 montrent que l'organisation du tressage des monofilaments en matériau isolant avec les fils conducteurs évite la formation d'arcs électriques, donc de courts-circuits, entre les deux fils conducteurs 4a, 4b à des potentiels différents, lorsque ceux-ci sont parcourus par une impulsion à haute tension et cela en augmentant la trajectoire des courants de surface entre les deux conducteurs 4a, 4b. Cela ressort clairement de la figure 5 où le faisceau F0, qui passe sous deux conducteurs 4a, 4b, circule entre les faisceaux F1 à F7 qui rallongent et voire même barrent la ligne de fuite des éventuels courants de surface.

L'entrelacement chaîne et trame d'une ligne tissée procure les mêmes résultats.

Aux figures 6 à 9 et 12 à 17 dans le but de faciliter le repérage des fils conducteurs, l'un d'eux est représenté par un trait continu épais et l'autre par un trait discontinu épais.

Alors que dans les formes d'exécution qui viennent d'être décrites, en références aux figures 2 et 3, concernant des lignes avec des conducteurs, respectivement, hélicoïdaux et rectilignes et dans lesquelles les dimensions transversales des monofilaments et des fils conducteurs sont sensiblement équivalentes, dans la forme d'exécution représentée aux figures 6 et 7, les fils conducteurs 4a, 4b ont des dimensions transversales plus grandes que celles des monofilaments pour être certains que les fils conducteurs viennent en contact ave les pattes d'un volatile.

Les figures 8 et 9 représentent une ligne répulsive dans laquelle deux paires respectivement 4a, 4b, 5a, 5b de fils conducteurs sont disposées longitudinalement et avec une répartition angulaire constante grâce au positionnement et au calage assurés par l' entremêlement avec les fuseaux du tressage. Comme dans la forme d'exécution précédente, la structure tubulaire obtenue est disposée sur une âme 2 en matière plastique.

Dans une variante, non représentée, les fils conducteurs nus 4a et 4b sont remplacés par des mono filaments en matériau non-conducteur de l'électricité comportant un guipage conducteur.

Dans la forme d'exécution représentée aux figures 12 et 13, les fils conducteurs 6a, 6b sont longitudinaux et disposés dans les lisières 7a, 7b d'un ruban tressé 8.

Ce ruban peut être réalisé sur une âme plate en matériau non-conducteur de l'électricité et, dans ce cas, être réalisé par tressage ou tissage.

Aux figures 14 et 15, les fils 6a, 6b sont disposés dans les lisières d'un ruban tissé 9.

Le nombre de conducteurs électriques de chaque structure 1 de la ligne A dépend de la différence de potentiel entre les deux conducteurs, mais aussi de la dimension transversale de la ligne répulsive, dimension qui est elle-même adaptée au type d'oiseaux devant être repoussés. Ainsi, pour les petits oiseaux, de type passereaux ou pigeons, elle a un diamètre de l'ordre de 5 millimètres, tandis que pour des oiseaux plus volumineux, tels que mouettes, goélands, elle a une dimension de l'ordre de 8 à 10 millimètres.

Comme montré à la figure 16, à l'une des extrémités de la ligne répulsive, les extrémités des conducteurs 4a, 4b sont enfermées dans un manchon en matière isolante 10, par exemple thermorétractable, et les deux manchons sont eux-mêmes disposés et cachés dans un autre manchon thermorétractable 12 rétracté sur l'extrémité de la structure 1 de la ligne répulsive. Si la ligne comporte plusieurs jeux de conducteurs, les conducteurs ayant le même potentiel peuvent être protégés dans le même manchon 10 ou recevoir chacun leur manchon.

En ce qui concerne l'extrémité de la ligne servant à l'alimentation et comme montré à la figure 17, chacune des extrémités des conducteurs de même potentiel est ramenée dans un même manchon 13 en matériau isolant thermorétracté sur eux. Une boucle ou cosse 14a ou 14b, dépassant du manchon 13, forme moyen de connexion. Une partie des manchons 13 est enfermée dans un manchon 15 thermorétracté sur l'extrémité de la ligne répulsive. Les deux cosses 14a, 14b peuvent être connectés aux bornes 16a, 16b du générateur C délivrant des impulsions à haute tension et faible énergie et, par exemple, comprises entre 7 000 et 10 000 volts, avec une fréquence de l'ordre de 1 Hertz en fournissant une énergie comprise entre 0,7 et 2 Joules, selon la longueur des fils conducteurs.

Avantageusement, pour faciliter les travaux d'isolement et de connexion à chacune des extrémités d'un fil conducteur dans une ligne avec des conducteurs disposés hélicoïdalement, chacun de ceux-ci est d'une couleur différente de celle de l'autre.

Il ressort de ce qui précède que, quelle que soit sa forme d'exécution, l'installation répulsive selon l'invention permet :
- par sa possibilité de déformation, de s'adapter à toutes les configurations se rencontrant,
- par sa structure, de fournir un moyen peu onéreux ne déparant les bâtiments et constructions sur lesquels elle est mise en place,
- et, par son mode de fonctionnement, de repousser les volatiles par électrisation impulsionnelle, sans les blesser ou les exterminer, et cela quelles que soient les conditions météorologiques et climatiques.

## Revendications

1. Installation électrique répulsive pour oiseaux comprenant au moins une paire (4a, 4b; 6a, 6b) de conducteurs électriques nus disposés parallèlement et alimentés à des potentiels différents et de façon discontinue, ces conducteurs étant portés par une structure (1, 1a, 8, 9) en matériau non conducteur de l'électricité et ayant une dimension transversale lui permettant d'être saisis par les pattes des oiseaux qu'il faut repousser, **caractérisée en ce que** chacun des conducteurs (4a, 4b; 6a, 6b) d'une paire de conducteurs, d'une part, est positionné et calé par rapport à l'autre conducteur de la même paire par entrecroisement de fils (3) ou fuseaux (F1 à F7) d'une structure tressée en monofilaments isolants (3), et, d'autre part, est muni, à l'une de ses extrémités, d'un manchon isolant (10) et, à son autre extrémité, d'un organe (14a, 14b) de connexion avec l'une des bornes d'un générateur (C) de décharges électriques impulsionnelles à haute tension fournissant une énergie comprise entre 0,7 et 2 joules.

2. Installation électrique répulsive pour oiseaux selon la revendication 1, **caractérisée en ce que** dans la ligne (A) formée par la structure (1) tressée, l'intervalle entre deux conducteurs (4a, 4b) d'une même paire est compris entre 7 et 15 millimètres suivant la valeur de la plus grande dimension transversale du support tressé (1), définie elle-même en rapport avec la dimension des pattes des oiseaux devant être repoussés.

3. Installation électrique répulsive pour oiseaux selon la revendication 2, **caractérisée en ce que** les monofilaments (3) composant les fils isolants des faisceaux tressés sont choisis parmi les matériaux hygrophobes suivants : polyoléfines, polychlorure de vinyles, polyester saturé, polyamide 11, polymères fluorés, polysulfures de phénylène.

4. Installation électrique répulsive pour oiseaux selon la revendication 1, **caractérisée en ce que** la structure tressée (1) est de forme tubulaire et est emmanchée sur, ou formée sur, une âme tubulaire (2) en matière thermoplastique souple constituant organe de rigidification et de fixation en collaboration avec des supports isolants (20) avec colliers (22) emprisonnants.

5. Installation électrique répulsive pour oiseaux selon l'une quelconque des revendications 1 et 4, **caractérisée en ce que** la structure tressée (1), est de forme tubulaire, avec ou sans âme, et contient une guirlande électrique (23) d'éclairage.

6. Installation électrique répulsive pour oiseaux selon l'une quelconque des revendications 1 et 4, **caractérisée en ce que** la structure tressée (1), avec ou sans âme (2), contient un câble chauffant (24).

7. Installation électrique répulsive pour oiseaux selon la revendication 1, **caractérisée en ce que** les conducteurs (4a, 4b) sont disposés hélicoïdalement dans la structure tressée (1).

8. Installation électrique répulsive pour oiseaux selon la revendication 1, **caractérisée en ce que** les conducteurs (4a, 4b) sont disposés longitudinalement dans la structure tressée (1).

9. Installation électrique répulsive pour oiseaux selon la revendication 1, **caractérisée en ce que** les conducteurs (6a, 6b) sont disposés dans les lisières (7a, 7b) d'un ruban tressé (8) ou tissé (9).

10. Installation électrique répulsive pour oiseaux selon la revendication 1, **caractérisée en ce que** chacun des conducteurs (4a, 4b) d'une paire de conducteurs à une coloration différente de celle de l'autre conducteur pour les repérer à chacune des extrémités de la structure (1) de la ligne répulsive.

## Claims

1. Bird-repellent electrical installation comprising at least one pair (4a, 4b; 6a, 6b) of bare electrical conductors disposed in a parallel manner and supplied at different potentials and in a discontinuous manner, these conductors being carried by a structure (1, 1a, 8, 9) made a material that is not a conductor of electricity and having a transverse dimension enabling it to be grasped by the feet of the birds that it is necessary to repel, **characterized in that** each of the conductors (4a, 4b; 6a, 6b) of a pair of conductors, on the one hand, is positioned and set with respect to the other conductor of the same pair by interlacing of threads (3) or bundles (F1 to F7) of a braided structure of insulating single strands (3) and, on the other hand, is provided, at one of its ends, with an insulating sleeve (10) and, at its other end, with a device (14a, 14b) for connecting with the terminals of a generator (C) of high-voltage electrical pulse discharges supplying an energy of between 0.7 and 2 joules.

2. Bird-repellent electrical installation according to claim 1, **characterized in that** in the line (A) formed by the braided structure (1), the gap between two conductors (4a, 4b) of a same pair is between 7 and 15 millimetres depending on the value of the largest transverse dimension of the braided support (1), which is itself defined with respect to the dimension of the feet of the birds that must be repelled.

3. Bird-repellent electrical installation according to claim 2, **characterized in that** the single strands (3) forming the insulating threads of the braided bundles are chosen from among the following hygrophobic materials: polyolefins, vinyl polychlorides, saturated polyester, polyamide 11, polymers containing fluorine, phenylene polysulphides.

4. Bird-repellent electrical installation according to claim 1, **characterized in that** the braided structure (1) is of tubular form and is fitted over, or formed on, a tubular core (2) made of flexible thermoplastic material forming a rigidifying and fixing device in conjunction with insulating supports (20) with retaining collars (22).

5. Bird-repellent electrical installation according to one of claims 1 to 4, **characterized in that** the braided structure (1) is of tubular form, with or without a core, and contains an electrical lighting garland (23).

6. Bird-repellent electrical installation according to one of claims 1 to 4, **characterized in that** the braided structure (1), with or without a core (2), contains a heating cable (24).

7. Bird-repellent electrical installation according to claim 1, **characterized in that** the conductors (4a, 4b) are disposed in a spiral manner in the braided structure (1).

8. Bird-repellent electrical installation according to claim 1, **characterized in that** the conductors (4a, 4b) are disposed longitudinally in the braided structure (1).

9. Bird-repellent electrical installation according to claim 1, **characterized in that** the conductors (6a, 6b) are disposed in the selvages (7a, 7b) of a braided (8) or woven (9) tape.

10. Bird-repellent electrical installation according claim 1, **characterized in that** each of the conductors (4a, 4b) of a pair of conductors has a different colouring from that of the other conductor in order to identify them at each of the ends of the structure (1) of the repellent line.

## Patentansprüche

1. Elektrische Abschreckeinrichtung für Vögel, die mindestens ein blankes elektrisches Leiterpaar (4a, 4b; 6a, 6b) umfasst, das parallel angeordnet ist, und diskontinuierlich mit verschiedenen Potentialen gespeist wird, wobei die Leiter durch eine Struktur (1, 1a, 8, 9) aus elektrisch nicht leitendem Material gestützt werden, die eine Querabmessung hat, die es erlaubt, von den Füßen der abzuschreckenden Vögel umfasst zu werden, **dadurch gekennzeichnet, dass** jeder der Leiter (4a, 4b; 6a, 6b) eines Leiterpaars zum einen bezüglich des anderen Leiters des selben Paars durch das Kreuzen von Fäden (3) oder Strängen (F1 bis F7) einer aus isolierenden Monofilamenten geflochtenen Struktur (3) positioniert und fixiert wird, und zum anderen an einem seiner Enden mit einer isolierenden Hülse (10) versehen ist, und am anderen Ende mit einem Anschlussteil (14a, 14b) zur Verbindung mit einem der Pole eines Generators (C) von elektrischen Impulsentladungen hoher Spannung, der eine Energie zwischen 0,7 und 2 Joule liefert.

2. Elektrische Abschreckeinrichtung für Vögel nach Anspruch 1, **dadurch gekennzeichnet, dass** in der durch die geflochtene Struktur (1) gebildeten Leitung (A) der Abstand zwischen zwei Leitern (4a, 4b) eines selben Paares zwischen 7 und 15 Millimetern liegt, je nach der größten Querabmessung des geflochtenen Stützmaterials (1), die wiederum passend zur Größe der Füße der abzuschreckenden Vögel definiert wird.

3. Elektrische Abschreckeinrichtung für Vögel nach Anspruch 2, **dadurch gekennzeichnet, dass** die Monofilamente (3), aus denen die isolierenden Fäden der geflochtenen Bündel bestehen, unter den folgenden hydrophoben Materialien gewählt werden: Polyolefine, Polyvinylchloride, gesättigte Polyester, Polyamid 11, fluorierte Polymere, Phenylen-Polysulfide.

4. Elektrische Abschreckeinrichtung für Vögel nach Anspruch 1, **dadurch gekennzeichnet, dass** die geflochtene Struktur (1) röhrenförmig ist und auf eine röhrenförmige Seele (2) aus flexiblem thermoplastischem Material aufgezogen oder auf ihr gebildet ist, wobei die Seele zur Versteifung und zur Befestigung dient, zusammen mit isolierenden Halterungen (20) mit umschließenden Schellen (22).

5. Elektrische Abschreckeinrichtung für Vögel nach einem der Ansprüche 1 und 4, **dadurch gekennzeichnet, dass** die geflochtene Struktur (1) röhrenförmig ist, mit oder ohne Seele, und eine elektrische Leuchtgirlande (23) enthält.

6. Elektrische Abschreckeinrichtung für Vögel nach einem der Ansprüche 1 und 4, **dadurch gekennzeichnet, dass** die geflochtene Struktur (1), mit oder ohne Seele (2), ein Heizkabel (24) enthält.

7. Elektrische Abschreckeinrichtung für Vögel nach Anspruch 1, **dadurch gekennzeichnet, dass** die Leiter (4a, 4b) helixförmig in der geflochtenen Struktur (1) angeordnet sind.

8. Elektrische Abschreckeinrichtung für Vögel nach Anspruch 1, **dadurch gekennzeichnet, dass** die Leiter (4a, 4b) in der Längsrichtung in der geflochtenen Struktur (1) angeordnet sind.

9. Elektrische Abschreckeinrichtung für Vögel nach Anspruch 1, **dadurch gekennzeichnet, dass** die Leiter (6a, 6b) an den Rändern (7a, 7b) eines geflochtenen (8) oder gewebten (9) Bandes angeordnet sind.

10. Elektrische Abschreckeinrichtung für Vögel nach Anspruch 1, **dadurch gekennzeichnet, dass** jeder der Leiter (4a, 4b) eines Leiterpaares eine andere Farbe hat als der andere Leiter, um sie an jedem Ende der Struktur (1) der Abschreckleitung zu finden.
